# EUROPEAN PATENT SPECIFICATION

(11) **EP 3 903 988 B1**
(45) Date of publication and mention of the grant of the patent: **12.06.2024**
(21) Application number: 19902331.8
(22) Date of filing: 26.12.2019
(51) Int. Cl.: B23K 26/00

(54) **METHOD FOR ASSESSING DEPENDENCE OF LASER MACHINING ON LASER LIGHT INTENSITY, AND LASER MACHINING DEVICE**
VERFAHREN ZUR BEURTEILUNG DER ABHÄNGIGKEIT DER LASERBEARBEITUNG VON DER LASERLICHTINTENSITÄT UND LASERBEARBEITUNGSVORRICHTUNG
PROCÉDÉ POUR ÉVALUER LA DÉPENDANCE D'UN USINAGE AU LASER VIS-À-VIS D'UNE INTENSITÉ DE LUMIÈRE LASER, ET DISPOSITIF D'USINAGE AU LASER

(30) Priority: 27.12.2018 JP 2018244267
(43) Date of publication of application: 03.11.2021
(73) Proprietor: The University of Tokyo, Bunkyo-ku, Tokyo 113-8654 (JP)
(72) Inventor: SAKURAI Haruyuki, Tokyo 113-8654 (JP); TAMARU Hiroharu, Tokyo 113-8654 (JP); KONISHI Kuniaki, Tokyo 113-8654 (JP); YUMOTO Junji, Tokyo 113-8654 (JP)
(74) Representative: Piotrowicz, Pawel Jan Andrzej
(86) International application number: PCT/JP2019/051081
(87) International publication number: WO 2020/138267

(56) References cited:
- JP-A- 2006 523 537
- JP-A- 2007 029 989
- JP-A- 2015 190 934
- JP-A- 2018 506 489
- US-A1- 2004 147 910
- US-A1- 2017 270 434

## Description

### Technical Field

The present invention relates to a method for assessing dependence of laser machining on laser light intensity, and a laser machining device making use of the method.

### Background Art

Techniques for determining distribution of laser light intensity using a so-called beam profiler are described in Patent Literatures 1 and 2 described below. These techniques, however, are not techniques for assessing dependence of laser machining on laser light intensity.

Especially, in laser machining, measurement of a breakage threshold indicating how much laser intensity a piece of matter breaks is a very important parameter. Conventionally, however, in order to experimentally determine a breakage threshold, it is necessary to repeat experiments while changing laser light intensity and observing results of the experiments by a microscope or the like (see Non Patent Literature 1 described below). Therefore, there is a problem that measurement of the threshold is very complicated. Moreover, this measurement assumes that intensity distribution of laser light is Gaussian distribution. Therefore, if actual intensity distribution of laser light is not Gaussian distribution, there is also a problem that reliability of an obtained breakage threshold is low.

US 2017/270434 A1 describes a machine learning apparatus that learns laser machining condition data of a laser machining system including: a state amount observation unit that observes a state amount of the laser machining system; an operation result acquisition unit that acquires a machined result of the laser machining system; a learning unit that receives an output from the state amount observation unit and an output from the operation result acquisition unit, and learns the laser machining condition data in association with the state amount and the machined result of the laser machining system; and a decision-making unit that outputs laser machining condition data by referring to the laser machining condition data learned by the learning unit.

### Citation List

### Patent Literature

Patent Literature 1:
   Japanese Patent Laid-Open No. 2015-190934
Patent Literature 2:
   Japanese Patent Laid-Open No. 2017-159319 Non Patent Literature

Non Patent Literature 1:
"Simple technique for measurements of pulsed Gaussian-beam spot sizes", J. M. Liu, Optics Letters 7, 196 (1982)

### Summary of Invention

### Technical Problem

The present invention has been made in view of the situation described above. One of main objects of the present invention is to provide a technique capable of assessing dependence of laser machining on laser light intensity with high accuracy by a simple method. Further, another object of the present invention is to provide a machining device and a machining method capable of performing laser machining based on the assessment.

### Solution to Problem

Means for solving the problem described above can be described like the following items.

### (Item 1)

A method for assessing dependence of laser machining on laser light intensity, the method including the steps of:
acquiring machining state information showing a machining state by the laser machining at a machining position on a workpiece;
acquiring intensity distribution information showing intensity distribution of laser light at the machining position; and
assessing dependence of the laser machining of the workpiece on the laser light intensity based on the machining state information and the intensity distribution information.

### (Item 2)

The method according to item 1, wherein
either or both of the machining state information and the intensity distribution information are information in n-dimensional directions for showing the machining position on the workpiece, where n is an integer equal to or larger than 2.

### (Item 3)

The method according to item 1 or 2, wherein the machining state of the workpiece is a state in which a shape of the workpiece has been changed by machining.

### (Item 4)

The method according to item 1 or 2, wherein the machining state of the workpiece is a state in which physical properties of the workpiece have been changed by machining.

### (Item 5)

The method according to any one of items 1 to 4, further including a step of causing a machining position in the machining state information and a machining position in the intensity distribution information to match, wherein
the assessment is performed based on overlapping of the machining state information and the intensity distribution information in a state of the machining positions being matched.

### (Item 6)

A laser machining device including:
a light source for radiating laser light to a workpiece to perform laser machining;
a machining state acquisition unit that acquires machining state information showing a machining state by the laser machining at a machining position on the workpiece;
an intensity distribution acquisition unit that acquires intensity distribution information showing intensity distribution of the laser light at the machining position; and
an assessment unit that assesses dependence of the laser machining of the workpiece on the laser light intensity based on the machining state information and the intensity distribution information.

### (Item 7)

A laser machining method using the laser machining device according to item 6, the laser machining method including the steps of:
radiating the laser light to the workpiece from the light source;
acquiring the machining state information showing the machining state at the machining position on the workpiece by the machining state acquisition unit;
acquiring the intensity distribution information showing the intensity distribution of the laser light at the machining position by the intensity distribution acquisition unit; and
assessing the dependence of the laser machining of the workpiece on the laser light intensity by the assessment unit based on the machining state information and the intensity distribution information, and obtaining the workpiece that is laser-machined by adjusting the machining state according to a result of the assessment.

### Advantageous Effects of Invention

According to the present invention, it becomes possible to assess dependence of laser machining on laser light intensity with high accuracy by a simple method. Further, it also becomes possible to perform laser machining based on the assessment.

### Brief Description of Drawings

[Figure 1] Figure 1 is a block diagram showing components of a measurement device used in a laser machining method in one embodiment of the present invention.
[Figure 2] Figure 2 is a schematic diagram of the measurement device of Fig. 1.
[Figure 3] Figure 3 is a flowchart for illustrating a procedure of the laser machining method performed using the device of Fig. 1.
[Figure 4] Figure 4 is a diagram showing an example of intensity distribution information, wherein the vertical and horizontal axes indicate X and Y directions, and intensity information about laser light is indicated by grayscale.
[Figure 5] Figure 5 is a diagram showing an example of machining state information, wherein the vertical and horizontal axes indicate X and Y directions, and depth information is indicated by grayscale.
[Figure 6] Figure 6 is a diagram schematically showing a state in which the machining state information and the intensity distribution information the coordinates of which have been matched are overlapped.
[Figure 7] Figure 7 is a graph showing a relationship between laser light intensity (the horizontal axis) and machining depth (the vertical axis) on a sapphire substrate.
[Figure 8] Figure 8 is a diagram for illustration a relationship between machining depth and a breakage threshold.
[Figure 9] Figure 9 is a block diagram showing components of a laser machining device used in the one embodiment of the present invention.

### Description of Embodiment

An assessment method according to one embodiment of the present invention will now be described with reference to accompanying drawings.

### (Measurement device)

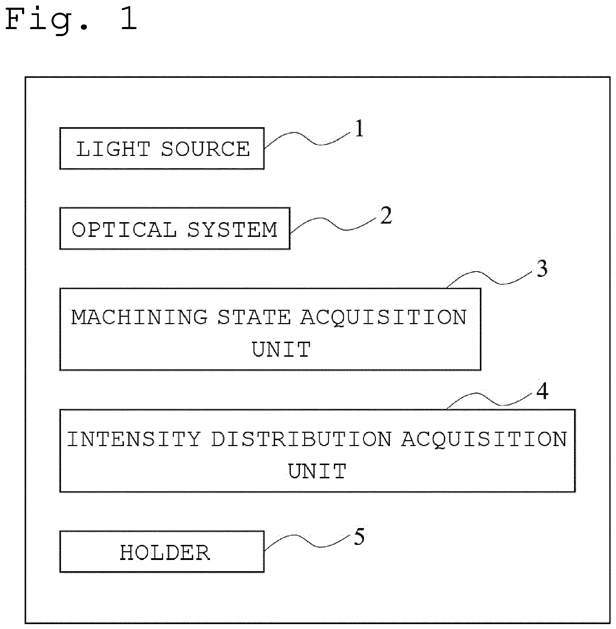

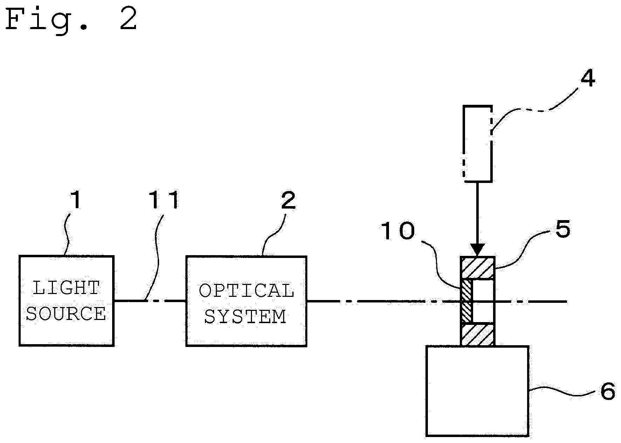

First, an outline of a measurement device used in the assessment method will be described based on Figures 1 and 2.

The measurement device is provided with a light source 1, an optical system 2, a machining state acquisition unit 3, an intensity distribution acquisition unit 4, a holder 5 and a stage 6 (see Figure 2).

### (Light source)

The light source 1 is for radiating laser light 11 (see Figure 2) to a workpiece 10 to perform laser machining. Here, the laser light 11 is set to advance from left to right in Figure 2. Further, in Figure 2, the optical axis direction of the laser light 11 is indicated by a long dashed short dashed line.

### (Optical system)

The optical system 2 transfers the laser light 11 radiated from the light source 1 toward the workpiece 10 held by the holder 5 and is provided with appropriate lenses, filters or a wavelength converter (not shown) as necessary.

### (Machining state acquisition unit)

The machining state acquisition unit 3 is configured to acquire machining state information showing a machining state in laser machining at a machining position on the workpiece 10. Here, it is assumed that machining in the present embodiment refers to an operation of causing the shape of the workpiece 10 to change or an operation of causing the physical properties of the workpiece 10 to change. Further, here, it is assumed that change in the shape of the workpiece 10 refers to partial removal of the workpiece (so-called removal machining) or addition of matter to the workpiece 10 (so-called addition machining). Therefore, machining in the present embodiment includes formation of a workpiece (a formed object) by a so-called stereolithography.

As the machining state acquisition unit 3, it is preferable to use an inspection device capable of acquiring change in the shape or physical properties of the workpiece 10 together with position information. For example, if the machining purpose is removal machining (that is, partial breakage) or addition machining of the workpiece 10, various kinds of microscopes capable of acquiring the shape of the workpiece 10 can be used. Further, though, for example, an electron microscope like a scanning electron microscope (SEM) can be used as the microscope, an optical microscope can be used depending on purposes.

Further, in a case where the machining purpose is change in the physical properties (that is, denaturation) of the workpiece 10, equipment capable of identifying the denaturation together with position information can be used as the machining state acquisition unit 3. For example, the SEM detects secondary electrons and the like emitted from a target object by an electron light radiated to the target object, and, therefore, it is also possible to detect a certain kind of denaturation that is not accompanied by change in the shape, using the SEM.

Anyway, the specific configuration of the machining state acquisition unit 3 of the present embodiment is not especially restricted if the machining state acquisition unit 3 can acquire necessary machining state information about the shape or denaturation of the workpiece 10.

### (Intensity distribution acquisition unit)

The intensity distribution acquisition unit 4 is configured to acquire intensity distribution information showing intensity distribution of laser light at a machining position. In the present embodiment, as the intensity distribution acquisition unit 4, a so-called beam profiler that is capable of acquiring intensity distribution of laser light within a two-dimensional surface is used. Here, it is preferable that resolution performance of the intensity distribution of laser light is as high as necessary. For example, when laser light is condensed by a lens, it is preferable to have a sufficient resolution within a condensation surface. As a more specific example, a CMOS sensor with a pixel size of 1.12 µm × 1.12 µm and a number of quantization bits of 10 bits can be used as a beam profiler.

### (Holder)

The holder 5 is configured to hold the workpiece 10. Since an appropriate configuration can be adopted for the holder 5, detailed explanation about the configuration will be omitted.

### (Stage)

The stage 6 is configured such that the three-dimensional position of the holder 5 (that is, on the X, Y and Z axes) can be adjusted, and, thereby, the position of the workpiece 10 can be adjusted via the holder 5. Further, the stage 6 is configured such that the intensity distribution acquisition unit 4 can be arranged at the same position as the holder 5, and the position of the intensity distribution acquisition unit 4 can be similarly adjusted. As the stage 6, anything that enables position adjustment with a required accuracy in a necessary direction may be used.

### (Assessment method of the present embodiment)

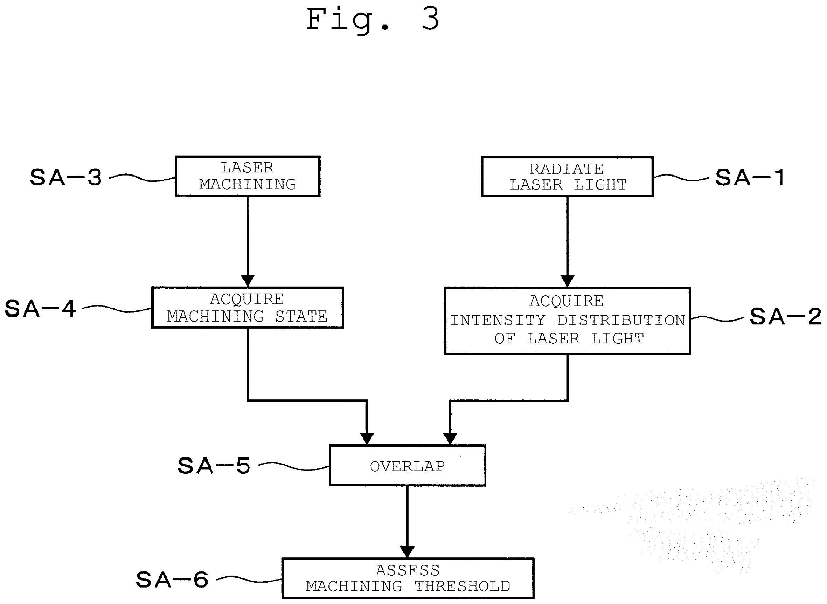

On the assumption of the above explanation, an assessment method according to the present embodiment will be explained by further referring to Figure 3. In the example below, an explanation will be made mainly on a case where removal machining for the workpiece 10 is performed.

### (SA-1 and SA-2 in Figure 3)

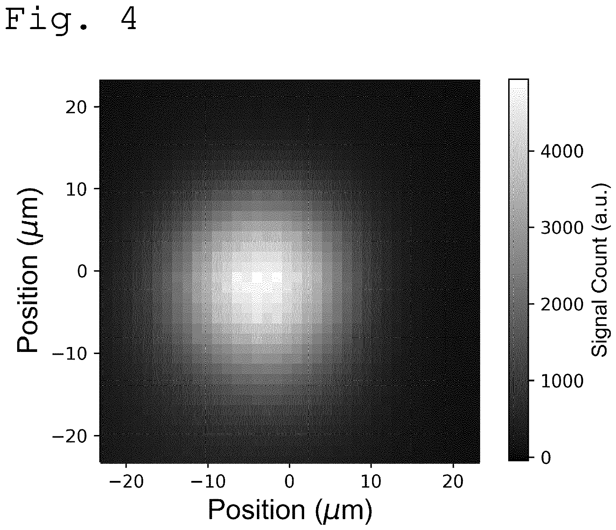

First, the intensity distribution acquisition unit 4 is arranged on the stage 6. The position of the intensity distribution acquisition unit 4 is the same as the position where the workpiece 10 is arranged for machining. In this state, the laser light 11 is radiated from the light source 1. The radiated laser light 11 reaches the intensity distribution acquisition unit 4 via the optical system 2. Thereby, the intensity distribution acquisition unit 4 can acquire intensity distribution information about the laser light 11 at a machining position on the workpiece. Figure 4 shows an example of the intensity distribution information obtained in this way. In the example in Figure 4, laser light intensity information corresponding to two-dimensional coordinates (that is, pixel positions) is shown.

### (SA-3 in Figure 3)

By arranging the holder 5 on the stage 6 after or before the step described above, the workpiece 10 is set at the machining position of the workpiece 10. After that, laser light radiation is performed similarly to step SA-1 described above to perform machining (in this example, removal machining) for the workpiece.

### (SA-4 in Figure 3)

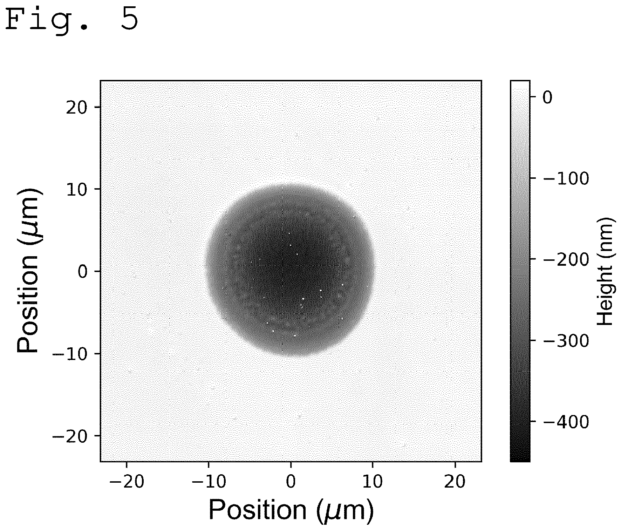

Next, machining state information about the workpiece 10 is acquired by the machining state acquisition unit 3. Figure 5 shows an example of the acquired machining state information. In this example, the depth of a hole formed by removal machining is shown corresponding to two-dimensional coordinates corresponding to the workpiece surface.

### (Step SA-5 in Figure 3)

Next, in the present embodiment, image processing for smoothing an image indicating the intensity distribution information, for example, pixel interpolation and smoothing are performed. Detailed explanation of the processing will be omitted because conventionally known methods can be used.

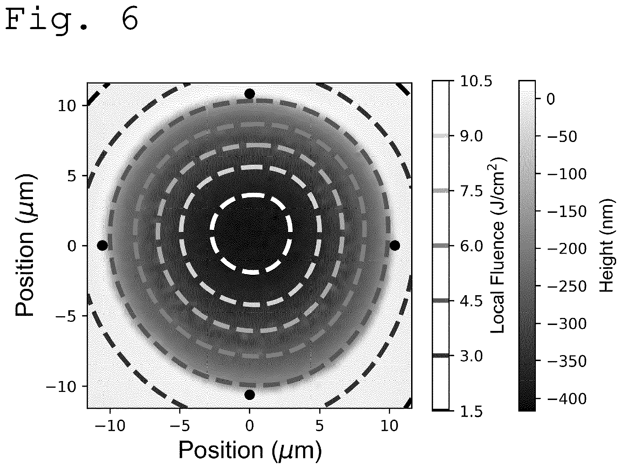

Next, the intensity distribution information and the machining state information the coordinate systems of which have been matched are overlapped. Figure 6 shows the overlapped state. At the time of the overlapping, two-dimensional coordinates of the intensity distribution information (see Figure 4) and two-dimensional coordinates of the machining state information (see Figure 5) that have been obtained are matched. For example, by adjusting relative positions of the origins and relative in-plane angles of rotation in Figures 4 and 5 so that laser intensities at points at ends of the machined hole (black points in Figure 6) are the most equal on each of the X and Y axes, it is possible to match the two-dimensional coordinates. That is, on the assumption that the amount of machining is the same if the laser light intensity is the same, adjustment is performed so that variation is minimized. By the overlapping, a relationship between laser light intensity and a depth at a particular position (that is, coordinates) can be known.

Figure 6 shows positions with the same laser light intensity by broken lines in elliptical shapes. That is, one broken line in an elliptical shape indicates a position with the same laser light intensity. However, Figure 6 is a schematic diagram for illustrating a concept, and such an overlapped diagram does not need to be actually created. In short, it is only required to acquire intensity distribution information and machining state information at a particular position on the workpiece 10.

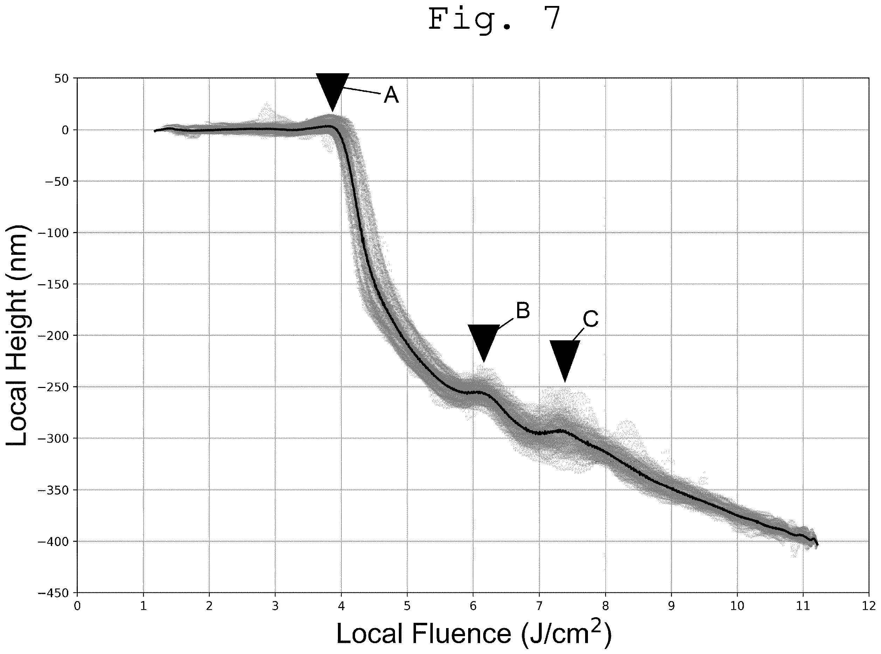

Figure 7 shows a relationship between laser light intensity and a machining depth. A machining depth (the vertical axis) corresponding to one laser light intensity has the same meaning as a depth acquired by following one broken line shown in Figure 6. That there is variance in the depth indicates that, even though the laser light intensity is the same, there are variations in depth. In Figure 7, the solid line indicates average values of depths at laser light intensities.

### (Step SA-6 in Figure 3)

Next, in the present embodiment, a breakage threshold for the workpiece 10 is assessed with reference to such an analysis result as in Figure 7.

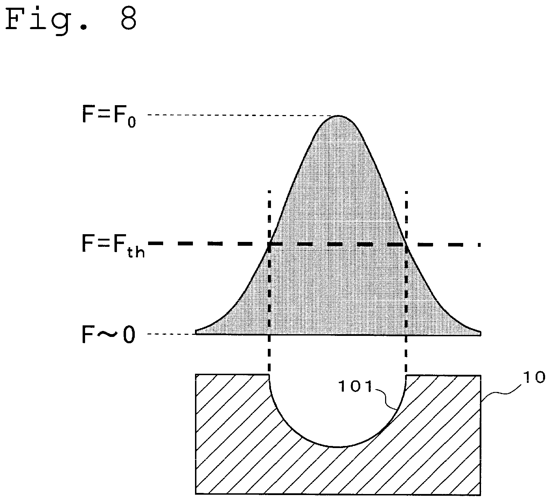

Here, a concept of the assessment of the breakage threshold in the present embodiment will be described with reference to Figure 8. Figure 8 schematically shows a section of a concave portion 101 formed on the workpiece 10. Above the concave portion 101, intensity distribution of radiated laser light is shown. The horizontal axis (positions) of the intensity distribution has been matched with positions on the workpiece 10.

In this state, laser light intensity F at an opening end position (that is, a breakage start position) of the concave portion 101 can be set as a breakage threshold Fₜₕ. In this diagram, F₀ indicates the peak of laser light intensity.

When Figure 7 is referred to, a tip of a triangle indicated by reference sign A in Figure 7 indicates the breakage threshold for the workpiece 10. Further, in Figure 7, it is thought that tips of triangles indicated by reference signs B and C show other breakage thresholds.

Though Figure 8 shows an example in which the intensity distribution of laser light is Gaussian distribution, it is possible to, according to the method of the present embodiment, accurately assess a breakage threshold in a waveform other than Gaussian distribution, for example, in bimodal distribution.

In laser machining, it is common to condense laser light to a machining point by a lens. In this case, the intensity distribution of laser light is not ideal Gaussian distribution. Even in such a case, however, a method of estimating a breakage threshold on the assumption of Gaussian distribution has been conventionally adopted, and there is a problem that estimation reliability is low. In comparison, according to the method of the present embodiment, it is possible to assess a breakage threshold not on the assumption of a particular intensity distribution wavelength but from actual intensity distribution. Therefore, there is an advantage of being able to improve accuracy of breakage threshold assessment.

Furthermore, in the method of the present example, it also becomes possible to assess such a plurality of thresholds as shown in Figure 7.

### (Laser machining device)

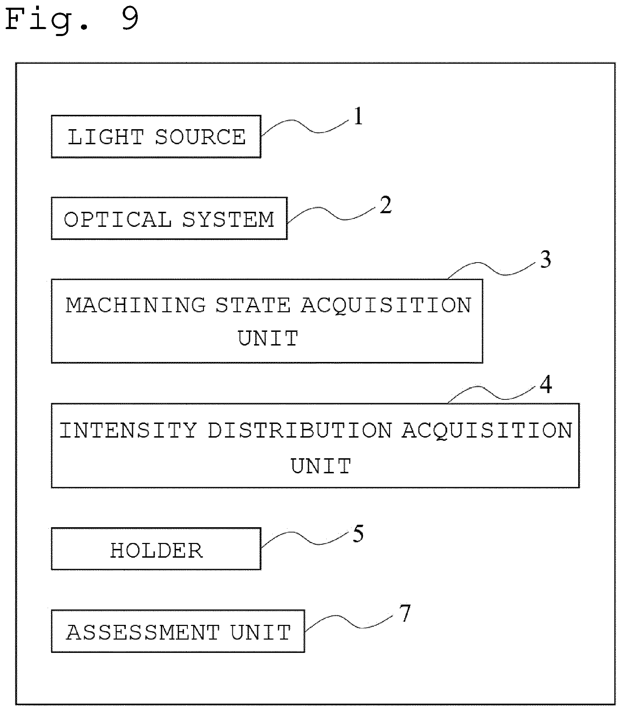

Next, an embodiment of a laser machining device making use of the method described above will be explained with reference to Figure 9. In the explanation of the machining device, by giving the same reference signs to components that are basically similar to the components of the measurement device described above, duplicated explanation will be avoided.

The machining device is further provided with an assessment unit 7 in addition to the device configuration in Figure 1. The assessment unit 7 is configured to assess dependence of laser machining of the workpiece 10 on laser light intensity, based on the machining state information obtained by the machining state acquisition unit 3 and the intensity distribution information obtained by the intensity distribution acquisition unit 4.

Specifically, the assessment unit 7 can extract such shape information as shown in Figure 7 and set laser light intensity at a point of a maximum amount of change as a breakage threshold based on the amount of change (for example, a differential value) in the shape information. The assessment unit 7 as above can be configured with computer hardware, computer software or a combination thereof. Further, it is possible to, based on such an assessment result, adjust, for example, a laser light output value of the light source 1 and the optical system 2 to optimize the machining state of the workpiece 10. Thereby, it is possible to obtain the workpiece 10 machined under optimal conditions.

Note that the scope of the present invention is not limited to the embodiment described above. The present invention is such that various kinds of changes can be made in the specific configuration within a range described in Claims.

For example, though mainly removal machining has been explained as laser machining in the explanation of the embodiment described above, the method of the present embodiment can be applied to machining other than removal machining, for example, addition machining. In this case also, it is possible to acquire shape information about a workpiece as shown in Figure 7 and assess a machining threshold using the shape information and laser light intensity distribution information.

Further, laser machining may be machining that causes denaturation in which only physical properties of a workpiece change without deformation of the workpiece. In this case, it is also possible to acquire denaturation position information on such two-dimensional coordinates as shown in Figure 5 by visualizing denaturation positions. By comparing the denaturation position information and such intensity distribution information as shown in Figure 4, a denaturation threshold can be assessed. If depth information about denaturation can be acquired by some means, it is also possible to assess the denaturation threshold using such denaturation position information in a depth direction as shown in Figure 7. It is also possible to automatically acquire the denaturation threshold by the assessment unit 7.

Furthermore, though the machining state information shown in Figures 5 and 7 is three-dimensional shape information in the X and Y directions on the surface of a workpiece and in the Z direction in a depth direction, a threshold can be assessed by two-dimensional information depending on use purposes without being limited to the above. That is, a boundary between a non-machining position and a machining position is estimated as a machining start position, and laser light intensity at this position can be assessed as a machining threshold.

Further, though both of the machining state information and the intensity distribution information are shown by still images (see Figures 4 and 5) in the embodiment described above, either or both of them may be moving images. Since a moving image can be thought to be still images discretely and sequentially acquired in time direction, the method of the present embodiment can be applied by appropriately using a part of the moving image.

Furthermore, though a threshold is exemplified as dependence of laser machining of a workpiece on laser light intensity in the embodiment described above, the method of the present invention described above can be applied in the case of some dependence or correlation between laser light intensity in laser machining and a state of machining by laser light, without being limited to a threshold.

### Reference Signs List

- 1: Light source
- 11: Laser light
- 2: Optical system
- 3: Machining state acquisition unit
- 4: Intensity distribution acquisition unit
- 5: Holder
- 6: Stage
- 7: Assessment unit
- 10: Workpiece
- 101: Concave portion of workpiece

## Claims

1. A method for assessing dependence of laser machining on laser light intensity, the method comprising the step of:
acquiring machining state information showing a machining state by the laser machining at a machining position on a workpiece (10); and **characterized by** the steps of :
acquiring intensity distribution information showing intensity distribution of laser light at the machining position; and
assessing dependence of the laser machining of the workpiece on the laser light intensity based on the machining state information and the intensity distribution information.

2. The method according to claim 1, wherein
either or both of the machining state information and the intensity distribution information are information in n-dimensional directions for showing the machining position on the workpiece (10), where n is an integer equal to or larger than 2.

3. The method according to claim 1 or 2, wherein the machining state of the workpiece (10) is a state in which a shape of the workpiece has been changed by machining.

4. The method according to claim 1 or 2, wherein the machining state of the workpiece (10) is a state in which physical properties of the workpiece have been changed by machining.

5. The method according to any one of claims 1 to 4, further comprising a step of causing a machining position in the machining state information and a machining position in the intensity distribution information to match, wherein
the assessment is performed based on overlapping of the machining state information and the intensity distribution information in a state of the machining positions being matched.

6. A laser machining device comprising:
a light source (1) for radiating laser light (11) to a workpiece (10) to perform laser machining;
a machining state acquisition unit (3) that acquires machining state information showing a machining state by the laser machining at a machining position on the workpiece; and characterizd by:
an intensity distribution acquisition unit (4) that acquires intensity distribution information showing intensity distribution of the laser light at the machining position; and
an assessment unit (7) that assesses dependence of the laser machining of the workpiece on the laser light intensity based on the machining state information and the intensity distribution information.

7. A laser machining method using the laser machining device according to claim 6, the laser machining method comprising the steps of:
radiating the laser light (11) to the workpiece (10) from the light source (1);
acquiring the machining state information showing the machining state at the machining position on the workpiece by the machining state acquisition unit (3);
acquiring the intensity distribution information showing the intensity distribution of the laser light at the machining position by the intensity distribution acquisition unit (4); and
assessing the dependence of the laser machining of the workpiece on the laser light intensity by the assessment unit (7) based on the machining state information and the intensity distribution information, and obtaining the workpiece that is laser-machined by adjusting the machining state according to a result of the assessment.

## Patentansprüche

1. Verfahren zum Beurteilen einer Abhängigkeit der Laserbearbeitung von der Laserlichtintensität, wobei das Verfahren den folgenden Schritt umfasst:
Erfassen von Bearbeitungszustandsinformationen, die einen Bearbeitungszustand durch die Laserbearbeitung an einer Bearbeitungsposition auf einem Werkstück (10) zeigen; und
**gekennzeichnet durch** die folgenden Schritte:
Erfassen von Intensitätsverteilungsinformationen, die eine Intensitätsverteilung des Laserlichts an der Bearbeitungsposition zeigen; und
Beurteilen der Abhängigkeit der Laserbearbeitung des Werkstücks von der Laserlichtintensität basierend auf den Bearbeitungszustandsinformationen und den Intensitätsverteilungsinformationen.

2. Verfahren nach Anspruch 1, wobei
eines oder beide von den Bearbeitungszustandsinformationen und den Intensitätsverteilungsinformationen Informationen in n-dimensionalen Richtungen zum Zeigen der Bearbeitungsposition auf dem Werkstück (10) sind, wobei n eine ganze Zahl gleich oder größer als 2 ist.

3. Verfahren nach Anspruch 1 oder 2, wobei der Bearbeitungszustand des Werkstücks (10) ein Zustand ist, in dem eine Form des Werkstücks durch die Bearbeitung geändert wurde.

4. Verfahren nach Anspruch 1 oder 2, wobei der Bearbeitungszustand des Werkstücks (10) ein Zustand ist, in dem physikalische Eigenschaften des Werkstücks durch die Bearbeitung geändert wurden.

5. Verfahren nach einem der Ansprüche 1 bis 4, ferner umfassend einen Schritt eines Bewirkens, dass eine Bearbeitungsposition in den Bearbeitungszustandsinformationen und eine Bearbeitungsposition in den Intensitätsverteilungsinformationen übereinstimmt, wobei
die Beurteilung auf Grundlage eines Überlappens der Bearbeitungszustandsinformationen und der Intensitätsverteilungsinformationen in einem Zustand, in dem die Bearbeitungspositionen übereinstimmen, durchgeführt wird.

6. Laserbearbeitungsvorrichtung, umfassend:
eine Lichtquelle (1) zum Ausstrahlen von Laserlicht (11) auf ein Werkstück (10), um eine Laserbearbeitung durchzuführen;
eine Bearbeitungszustandserfassungseinheit (3), die Bearbeitungszustandsinformationen erfasst, die einen Bearbeitungszustand durch die Laserbearbeitung an einer Bearbeitungsposition auf dem Werkstück zeigen; und **gekennzeichnet durch**:
eine Intensitätsverteilungserfassungseinheit (4), die Intensitätsverteilungsinformationen erfasst, die die Intensitätsverteilung des Laserlichts an der Bearbeitungsposition zeigen; und
eine Beurteilungseinheit (7), die die Abhängigkeit der Laserbearbeitung des Werkstücks von der Laserlichtintensität basierend auf den Bearbeitungszustandsinformationen und den Intensitätsverteilungsinformationen beurteilt.

7. Laserbearbeitungsverfahren unter Verwendung der Laserbearbeitungsvorrichtung nach Anspruch 6, wobei das Laserbearbeitungsverfahren die folgenden Schritte umfasst:
Ausstrahlen des Laserlichts (11) von der Lichtquelle (1) auf das Werkstück (10);
Erfassen der Bearbeitungszustandsinformationen, die den Bearbeitungszustand an der Bearbeitungsposition auf dem Werkstück zeigen, durch die Bearbeitungszustandserfassungseinheit (3);
Erfassen der Intensitätsverteilungsinformationen, die die Intensitätsverteilung des Laserlichts an der Bearbeitungsposition zeigen, durch die Intensitätsverteilungserfassungseinheit (4); und
Beurteilen der Abhängigkeit der Laserbearbeitung des Werkstücks von der Laserlichtintensität durch die Beurteilungseinheit (7) basierend auf den Bearbeitungszustandsinformationen und den Intensitätsverteilungsinformationen, und Erhalten des Werkstücks, das durch Anpassen des Bearbeitungszustands gemäß einem Ergebnis der Beurteilung laserbearbeitet ist.

## Revendications

1. Procédé permettant l'évaluation de la dépendance d'un usinage au laser vis-à-vis d'une intensité de lumière laser, le procédé comprenant l'étape de :
acquisition des informations d'état d'usinage montrant un état d'usinage par l'usinage au laser au niveau d'une position d'usinage sur une pièce à travailler (10) ; et **caractérisé par** les étapes de :
acquisition des informations de distribution d'intensité montrant la distribution d'intensité de la lumière laser au niveau de la position d'usinage ; et
évaluation de la dépendance de l'usinage au laser de la pièce à travailler vis-à-vis de l'intensité de lumière laser sur la base des informations d'état d'usinage et des informations de distribution d'intensité.

2. Procédé selon la revendication 1,
lesdites informations d'état d'usinage et/ou lesdites informations de distribution d'intensité étant des informations dans des directions à n dimensions pour montrer la position d'usinage sur la pièce à travailler (10), où n est un nombre entier supérieur ou égal à 2.

3. Procédé selon la revendication 1 ou 2, ledit état d'usinage de la pièce à travailler (10) étant un état dans lequel une forme de la pièce à travailler a été modifiée par usinage.

4. Procédé selon la revendication 1 ou 2, ledit état d'usinage de la pièce à travailler (10) étant un état dans lequel des propriétés physiques de la pièce à travailler ont été modifiées par usinage.

5. Procédé selon l'une quelconque des revendications 1 à 4, comprenant en outre une étape d'entraînement d'une position d'usinage dans les informations d'état d'usinage et d'une position d'usinage dans les informations de distribution d'intensité à coïncider l'une avec l'autre,
ladite évaluation étant effectuée sur la base du chevauchement des informations d'état d'usinage et des informations de distribution d'intensité dans un état de coïncidence des positions d'usinage.

6. Dispositif d'usinage au laser comprenant :
une source de lumière (1) destinée à émettre une lumière laser (11) vers une pièce à travailler (10) pour effectuer un usinage au laser ;
une unité d'acquisition d'état d'usinage (3) qui acquiert des informations d'état d'usinage montrant un état d'usinage par usinage au laser au niveau d'une position d'usinage sur la pièce à travailler ; et **caractérisé par** :
une unité d'acquisition de distribution d'intensité (4) qui acquiert des informations de distribution d'intensité montrant la distribution d'intensité de la lumière laser au niveau de la position d'usinage ; et
une unité d'évaluation (7) qui évalue la dépendance de l'usinage au laser de la pièce à travailler vis-à-vis de l'intensité de lumière laser sur la base des informations d'état d'usinage et des informations de distribution d'intensité.

7. Procédé d'usinage au laser à l'aide du dispositif d'usinage au laser selon la revendication 6, le procédé d'usinage au laser comprenant les étapes de :
émission de la lumière laser (11) vers la pièce à travailler (10) à partir de la source de lumière (1) ;
acquisition des informations d'état d'usinage montrant l'état d'usinage au niveau de la position d'usinage sur la pièce à travailler par l'unité d'acquisition d'état d'usinage (3) ;
acquisition des informations de distribution d'intensité montrant la distribution d'intensité de lumière laser au niveau de la position d'usinage par l'unité d'acquisition de distribution d'intensité (4) ; et
l'évaluation de la dépendance de l'usinage au laser de la pièce à travailler vis-à-vis de l'intensité de lumière laser par l'unité d'évaluation (7) sur la base des informations d'état d'usinage et des informations de distribution d'intensité, et l'obtention de la pièce à travailler qui est usinée au laser en ajustant l'état d'usinage selon un résultat de l'évaluation.
